# EUROPÄISCHE PATENTANMELDUNG

(11) **EP 0 081 151 A1**
(43) Veröffentlichungstag der Anmeldung: **15.06.1983**
(21) Anmeldenummer: 82110892.5
(22) Anmeldetag: 25.11.1982
(51) Int. Cl.: C07F 9/65, A01N 57/16

(54) **Organophosphate, Verfahren zu ihrer Herstellung sowie diese enthaltende Schädlingsbekämpfungsmittel**

(30) Priorität: 07.12.1981 JP 195603/81
(71) Anmelder: NIHON TOKUSHU NOYAKU SEIZO K.K., Chuo-ku Tokyo 103 (JP)
(72) Erfinder: Kudamatsu, Akio, Kawasaki-shi Kanagawa-ken (JP); Kume, Toyohiko, Hino-shi Tokyo (JP); Tsuboi, Shinichi, Hino-shi Tokyo (JP)
(74) Vertreter: Schumacher, Günter, Dr.

(57) **Zusammenfassung**

Die vorliegende Erfindung betrifft neue Organophosphate, ein Verfahren zu ihrer Herstellung, sowie diese enthaltende Schädlingsgekämpfungsmittel.

Die neuen Organophosphate haben die nachstehende Formel 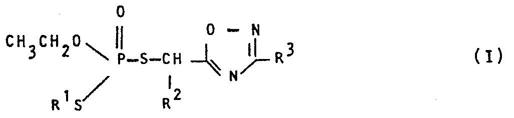 in der
R¹ für eine Alkyl-Gruppe mit 3 bis 4 Kohlenstoff-Atomen oder eine Alkoxyethyl-Gruppe mit einer Alkoxy-Struktureinheit mit 1 bis 4 Kohlenstoff-Atomen,
R² für ein Wasserstoff-Atom oder eine Methyl-Gruppe und
R³ für eine Alkyl-Gruppe mit 1 bis 4 Kohlenstoff-Atomen oder eine Phenyl-Gruppe, die durch mindestens einen Substituenten ausgewählt aus der aus einem Halogen-Atom, einer Trifluoromethyl-Gruppe, Nitro-Gruppe, Alkyl-Gruppe mit 1 bis 4 Kohlenstoffatomen und Alkoxy-Gruppe mit 1 bis 4 Kohlenstoffatomen bestehenden Gruppe substituiert sein kann,

stehen.

## Beschreibung

Die vorliegende Erfindung betrifft neue Organophosphate, ein Verfahren zu ihrer Herstellung, sowie diese enthaltende Schädlingsbekämpfungsmittel, insbesondere Insektizide,Akarizide und Nematozide.

Die vorliegende Erfindung betrifft insbesondere neue Organophosphate der nachstehenden Formel 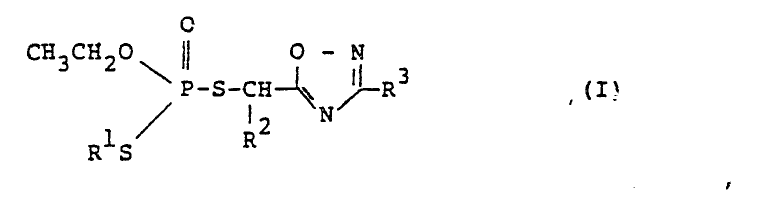 in der
R¹ für eine Alkyl-Gruppe mit 3 bis 4 Kohlenstoff-Atomen oder eine Alkoxyethyl-Gruppe mit einer Alkoxy-Struktureinheit mit 1 bis 4 Kohlenstoff-Atomen,
_{R}² für ein Wasserstoff-Atom oder eine Methyl-Gruppe und
R³ für eine Alkyl-Gruppe mit 1 bis 4 Kohlenstoff-Atomen oder eine Phenyl-Gruppe, die .durch mindestens einen Substituenten ausgewählt aus der aus einem Halogen-Atom, einer Trifluoromethyl-Gruppe, Nitro-Gruppe, Alkyl-Gruppe mit 1 bis 4 Kohlenstoff-Atomen und Alkoxy-Gruppe mit 1 bis 4 Kohlenstoff-Atomen bestehenden Gruppe substituiert sein kann,

stehen.

Die Verbindungen gemäß der vorliegenden Erfindung können mittels des folgenden Verfahrens hergestellt werden, auf das sich vorliegende Erfindung ebenfalls bezieht. Hierbei handelt es sich um ein Verfahren zur Herstellung der durch die vorhergehende allgemeine Formel (I) bezeichneten Organophosphate, bei dem ein Dithiophosphat oder dessen Salz der nachstehenden allgemeinen Formel 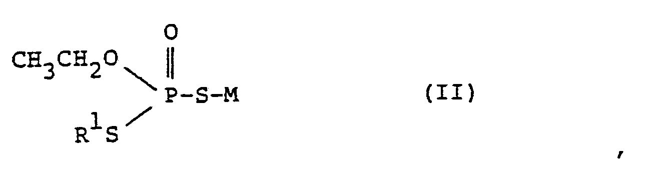 in der R die oben angegebene Bedeutung hat und M für ein Wasserstoff-Atom, ein Alkalimetall-Atom oder eine Ammonium-Gruppe steht, mit einer Verbindung der nachstehenden allgemeinen Formel 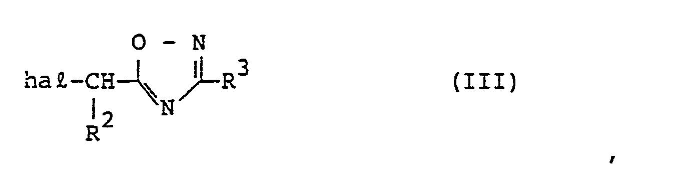 in der R² und R³ die oben angegebenen Bedeutungen haben und hal für ein Halogen-Atom (vorzugsweise Chlor oder Brom) steht, umgesetzt werden.

Die vorliegende Erfindung betrifft weiterhin Schädlingsbekämpfungsmittel, insbesondere Insektizide, Akarizide und Nematozide, die als Wirkstoffe die Organophosphate der vorstehenden allgemeinen Formel (I) enthalten.

Die US-PS 4 237 121 beschreibt die Verwendung von Verbindungen der nachstehenden allgemeinen Formel 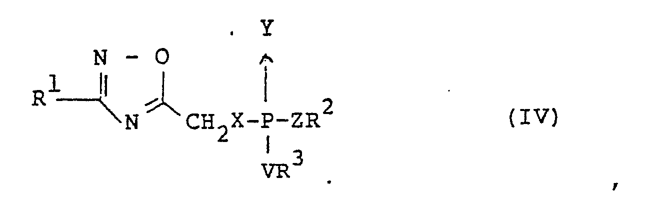 in der _{R}¹, _{R}² und R³ jeweils für eine Alkyl-Gruppe mit 1 bis 4 Kohlenstoff-Atomen und X, Y, V und Z jeweils für ein Sauerstoff- oder Schwefel-Atom stehen, zur Bekämpfung besonders schädlicher Insekten der Gattung Diabrotica.

Die US-PS 3 432 519 (entsprechend der JP-Patentveröffentlichung Nr. 24 600/69) beschreibt, daß Verbindungen der nachstehenden allgemeinen Formel 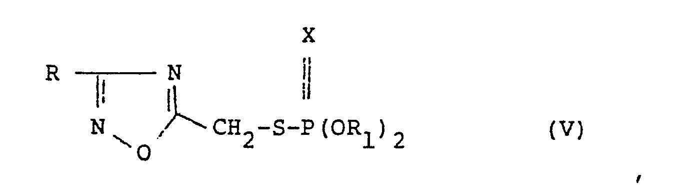 in der R für eine Alkyl-Gruppe mit 1 bis 6 Kohlenstoff- Atomen, die eine Alkoxy-Gruppe mit 1 bis 4 Kohlenstoff- Atomen tragen kann, oder eine Phenyl-Gruppe, die einen, zwei oder mehr Substituenten ausgewählt aus einem Chlor-Atom, einer Nitro-Gruppe und einer Alkoxy-Gruppe mit 1 bis 4 Kohlenstoff-Atomen tragen kann, R¹ für eine Alkyl-Gruppe mit 1 bis 4 Kohlenstoff-Atomen und X für ein Sauerstoff- oder Schwefel-Atom stehen, insektizide und akarizide Wirksamkeit besitzen.

Seitens der Anmelderin wurden seit langem Untersuchungen über typische Organophosphat-Insektizide durchgeführt. Als ein Ergebnis.dieser Untersuchungen wurden nunmehr die durch die vorhergehende allgemeine Formel (I) bezeichneten neuen Organophosphate, die soweit bekannt bisher nicht in der Literatur beschrieben sind, mit Erfolg synthetisiert, und es wurde gefunden, daß die Verbindungen (I) in unerwarteter Weise eine ausgezeichnete spezifische biologische Wirksamkeit zeigen.

Aufgrund der vorerwähnten Untersuchungen wurde gefunden, daß die Organophosphate der vorhergehenden allgemeinen Formel (I) eine in außerordentlicher Weise herausragende Bekämpfungswirkung gegenüber Schadinsekten, Zecken und Nematoden in Landwirtschaft und Gartenbau zeigen und daß die Bekämpfungswirkung der Verbindungen (I) um vieles besser ist als diejenige von in den vorgenannten Patentschriften beschriebenen Verbindungen mit analoger chemischer Struktur.

Die Verbindungen der vorliegenden Erfindung zeigen die folgenden Strukturmerkmale:
(i) Sie besitzen das Grundgerüst der Dithiophosphorsäure, die einen 0-Ethylester bildet. 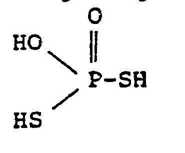
(ii) Das Dithiophosphorsäure-Gerüst bildet weiterhin einen S-Alkylester (mit 3 bis 4 Kohlenstoff- Atomen) oder einen S-Alkoxyethylester (mit 1 bis 4 Kohlenstoff-Atomen in der Alkoxy-Gruppe), vorzugsweise einen S-n-Propylester, S-sec-Butylester oder S-Ethoxyethylester, und
(iii) das verbleibende Schwefel-Atom des Dithiophosphorsäure-Gerüsts wird dazu verwendet, einen S-3-substituierten-l,2,4-oxadiazol-5-ylmethyl- ester oder S-1-(3-substituierten-1,2,4-oxa- diazol-5-yl)ethylester zu bilden.

Nur diese beschriebene spezielle Struktur kann diese außerordentlich herausragende biologische Wirksamkeit liefern, die bisher nicht erreicht werden konnte.

Gegenstand der vorliegenden-Erfindung sind deshalb die neuen Organophosphat-Verbindungen der vorstehenden allgemeinen Formel (I), ein Verfahren zu ihrer Herstellung sowie ihre Verwendung als Schädlingsbekämpfungsmittel, insbesondere Insektizide, Akarizide und Nematozide.

Die Verbindungen gemäß der vorliegenden Erfindung zeigen eine angemessene Bekämpfungswirkung gegenüber Schadinsekten, Zecken und Nematoden, ohne daß sie irgendeine Phytotoxizität gegenüber Kulturpflanzen aufweisen. Die Verbindungen können auch zur Bekämpfung einer breiten Vielfalt von Schadinsekten eingesetzt werden, etwa saftsaugende Schadinsekten an Pflanzen, beißende Insekten an Pflanzen und andere pflanzenparasitische Schadinsekten, Schadinsekten für die Lagerung von Nutzpflanzenernten etc., gesundheitsschädliche Insekten etc., die dadurch getötet und ausgeschaltet werden.

Spezielle Beispiele für die Insekten, die bekämpft werden können, sind:
Insekten der Ordnung Coleoptera, wie etwa Callosobruchus chinensis, Sitophilus zeamais, Tribolium castaneum, Epilachna vigintioctomaculata, Agriotes fuscicollis, Anomala rufocuprea, Leptinotarsa decemlineata, Monochamus alternatus und Lyctus brunneus;
Insekten der Ordnung Lepidoptera, wie etwa Lymantria dispar, Malacosoma neustria, Pieris rapae, Spodoptera litura, Mamestra brassicae, Chilo suppressalis, Pyrausta nubilalis, Ephestia cautella, Adoxophyes orana, Carpocapsa pomonella, Galleria mellonella und Phyllocnistis citrella;
Insekten der Ordnung Hemiptera, wie etwa Nephotettix cincticeps, Nilaparvata lugens, Pseudococcus comstocki, Unaspis yanonensis, Myzus persicae, Aphis pomi, Rhopalosiphum pseudobrassicae, Stephanitis nashi, Nazara spp., Cimex lectularius, Trialeurodes vaporariorum und Psylla spp.;
Insekten der Ordnung Orthoptera, wie etwa Blatella germanica, Periplaneta americana, Gryllotalpa africana und Locusta migratoria migratoriodes;
Insekten der Ordnung Isoptera, wie etwa Deucotermes speratus und Coptotermes formosanus; sowie
Insekten der Ordnung Diptera, wie etwa Musca domestica, Aedes aegypti, Culex pipiens, Anopheles sinensis, Culex tritaeniorhynchus etc..

Spezielle Beispiele für die Zecken sind:
Tetranychus cinnabarinus,
Panonychus citri,
Aculus pelekassi und
Torronomus spp..

Spezielle Beispiele für Nematoden sind:
Meloidogyne incognita,
Aphelenchoides besseyi,
Bursaphelenchus lignicolus,
Heterodera glycines und
Pratylenchus spp..

Auf dem Gebiet der Tierhaltung und Tierzucht sind die Verbindungen gemäß der vorliegenden Erfindung gegenüber verschiedenen schädlichen Tierparasiten (inneren und äußeren Parasiten) wie Zecken, Insekten und Würmern wirksam.

Spezielle Beispiele für solche Zecken sind:
Oranithodoros spp.,
Ixodes spp. und
Boophilus spp..

Spezielle Beispiele für solche Insekten sind:
Gastrophilus spp.,
Stomoxys spp.,
Trichodectes spp. und
Ctenocephalides canis.

In der vorliegenden Erfindung bezeichnet der Begriff "Insektizide" gelegentlich solche Substanzen, die zur Tötung sämtlicher der beschriebenen schädlichen Organismen befähigt sind.

Die Verbindungen gemäß der vorliegenden Erfindung können beispielsweise mittels des folgenden Verfahrens hergestellt werden:

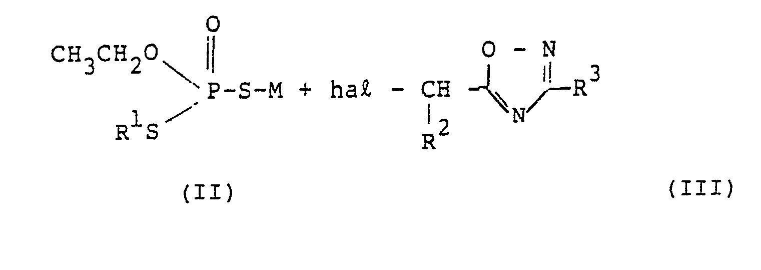

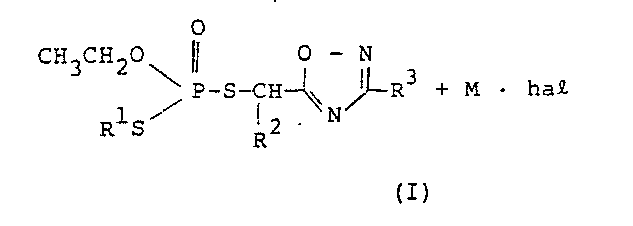

In den Formeln haben R¹, R², R³, M und hal die im Vorstehenden angegebenen Bedeutungen.

In dem vorstehenden Reaktionsschema umfassen Beispiele für R¹ eine Alkyl-Gruppe mit 3 bis 4 Kohlenstoff-Atomen wie eine n-Propyl-Gruppe, eine Isopropyl-Gruppe, eine n- (iso-, sec- oder tert-)- Butyl-Gruppe und eine Alkoxyethyl-Gruppe mit einer Alkoxy-Struktureinheit mit 1 bis 4 Kohlenstoff-Atomen wie Methoxy, Ethoxy, Propoxy, Isopropoxy, oder n- (iso-, sec- oder tert-)-Butoxy; Beispiele für R 2 umfassen ein Wasserstoff-Atom und eine Methyl-Gruppe, und Beispiele für R³ umfassen eine Alkyl-Gruppe 1 bis 4 Kohlenstoff-Atomen wie eine Methyl-Gruppe, eine Ethyl-Gruppe, eine n-Propyl-Gruppe, eine Isopropyl-Gruppe oder eine n- (iso-, sec- oder tert-)-Butyl-Gruppe und eine gegebenenfalls substituierte Phenyl-Gruppe. Als Substituenten, die die Phenyl-Gruppe wahlweise trägt, kommen diejenigen aus der Gruppe, und zwar mindestens einer hiervon, bestehend aus einem Halogen-Atom wie einem Fluor-, Chlor-, Brom- oder IodAtom, einer Trifluoromethyl-Gruppe, einer Nitro-Gruppe, einer Alkyl-Gruppe mit 1 bis 4 Kohlenstoffatomen wie oben angeführt und einer Alkoxy-Gruppe mit 1 bis 4 Kohlenstoff atomen wie oben angeführt in Betracht (vorzugsweise trägt die Phenyl-Gruppe einen dieser Substiuentenl.

Spezielle Beispiele für die Dithiophosphorsäure oder deren Salz der allgemeinen Formel (II), die als Ausgangsmaterial für das im Vorstehenden dargestellte Reaktionsschema zur Herstellung der Verbindungen gemäß der vorliegenden Erfindung eingesetzt werden können, sind:
O-Ethyl-S-propyl-wasserstoffphosphorodithiolat,
O-Ethyl-S-sec-butyl-wasserstoffphosphorodithiolat u.
O-Ethyl-S-ethoxyethyl-wasserstoffphosphorodithiolat.

Auch deren Alkalimetall-Salze wie das Natrium- und Kalium-Salz sowie deren Ammonium-Salz können eingesetzt werden.

Spezielle Beispiele für die Verbindungen der allgemeinen Formel (III), die in ähnlicher Weise als Ausgangsmaterial verwendet werden können, sind:
3-Methyl-1,2,4-oxadiazol-5-ylmethylchlorid,
1-(3-Methyl-1,2,4-oxadiazol-5-yl)ethylchlorid,
3-Phenyl-1,2,4-oxadiazol-5-ylmethylchlorid,
1-(3-Phenyl-1,2,4-oxadiazol-5-yl)ethylchlorid,
3-(4-Chlorophenyl)-l,2,4-oxadiazol-5-ylmethyl- chlorid,
1-[3-(4-Chlorophenyl)-1,2,4-oxadiazol-5-yl]ethylchlorid,
3-(3-Trifluoromethylphenyl)-1,2,4-oxadiazol-5-yl- methylchlorid,
3-(4-nitrophenyl)-1,2,4-oxadiazol-5-ylmethylchlorid,
3-p-Tolyl-1,2,4-oxadiazol-5-ylmethylchlorid,
3-(4-Methoxyphenyl)-1,2,4-oxadiazol-5-ylmethyl- chlorid,
3-(4-Bromophenyl)-1,2,4-oxadiazol-5-ylmethylchlorid,
3-(4-Propylphenyl)-1,2,4-oxadiazol-5-ylmethyl- chlorid,
1-(3-Isopropyl-1,2,4-oxadiazol-5-yl)ethylchlorid,
3-Isopropyl-1,2,4-oxadiazol-5-ylmethylchlorid,
1-(3-Ethyl-1,2,4-oxadiazol-5-yl)ethylchlorid,
1-(3-Propyl-1,2,4-oxadiazol-5-yl)ethylchlorid,
1-(3-sec-Butyl-1,2,4-oxadiazol-5-yl)ethylchlorid u.
1-(3-tert-Butyl-1,2,4-oxadiazol-5-yl)ethylchlorid.

Weiterhin können auch statt der aufgeführten Chloride die entsprechenden Bromide eingesetzt werden.

Das Verfahren zur Herstellung der Verbindungen der vorliegenden Erfindung wird im Folgenden anhand eines typischen Beispiels beschrieben: 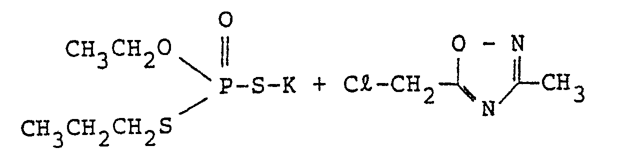 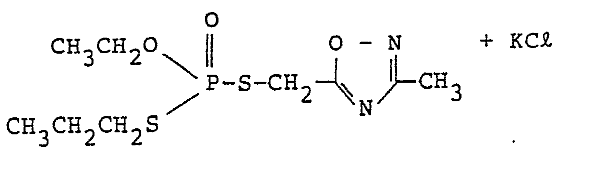 Das Verfahren zur Herstellung der Verbindungen der vorliegenden Erfindung kann zweckmäßigerweise in Gegenwart eines Lösungs- oder Verdünnungsmittels durchgeführt werden. Als ein solches Lösungs- oder Verdünnungsmittel kann jedes inerte Lösungs- oder Verdünnungsmittel verwendet werden.

Beispiele für solche Lösungsmittel oder Verdünnungsmittel sind Wasser; aliphatische oder aromatische (gegebenenfalls chlorierte) Kohlenwasserstoffe wie Hexan, Cyclohexan, Petrolether, Ligroin, Benzol, Toluol, Xylol, Methylenchlorid, Chloroform, Kohlenstofftetrachlorid, Ethylenchlorid, Trichloroethylen, Chlorbenzol etc.; Ether wie Diethylether, Methylethylether, Di-isopropylether, Dibutylether, Propylenoxid, Dioxan, Tetrahydrofuran etc.; Ketone wie Aceton, Methylethylketon, Methylisobutylketon etc.; Nitrile wie Acetonitril, Propionitril, Acrylnitril etc.; Alkohole wie Methanol, Ethanol, Isopropanol, Butanol, Ethylenglycol etc.; Ester wie Ethylacetat, Amylacetat etc.; Säureamide wie Dimethylformamid, Dimethylacetamid; Sulfone und Sulfoxide wie Dimethylsulfoxid, Sulfolan etc.; und Basen wie Pyridin etc..

Wie im Vorstehenden beschrieben kann die Reaktion gemäß der vorliegenden Erfindung in Gegenwart eines säurebindenden Mittels durchgeführt werden. Als ein solches säurebindendes Mittel kommen allgemein verwendete Hydroxide, Carbonate, Hydrogencarbonate und Alkoholate von Alkalimetallen sowie tertiäre Amine wie Triethylamin, Diethylanilin, Pyridin etc. in Betracht.

Das Verfahren gemäß der vorliegenden Erfindung kann in einem weiten Temperaturbereich durchgeführt werden, im allgemeinen zwischen -20°C und dem Siedepunkt der Reaktionsmischung, vorzugsweise zwischen etwa 0°C und etwa 100°C. Die Reaktion wird vorzugsweise unter gewöhnlichem Druck durchgeführt, kann jedoch auch unter erhöhtem oder vermindertem Druck durchgeführt werden.

Bei der Anwendung der Verbindungen der vorliegenden Erfindung als Schädlingsgekämpfungsmittel können sie direkt nach Verdünnen mit Wasser oder in Form verschiedenartiger Präparate, wie sie gewöhnlich unter Verwendung agrochemischer Hilfsstoffe hergestellt werden, mittels der in der Landwirtschaft üblichen Verfahren aufgebracht.werden. Beim Einsatz können solche Schädlingsgekämpfungsmittel in den verschiedenen Anwendungsformen unmittelbar als solche oder nach Verdünnen mit Wasser auf eine gewünschte Konzentration verwendet werden.

Als agrochemische Hilfsstoffe seien beispielsweise Verdünnungsmittel (Lösungsmittel, Verdünnungsmittel und Träger), oberflächenaktive Stoffe (Lösungsvermittler, Emulgatoren, Dispergiermittel und Netzmittel), Stabilisatoren, Haftmittel, Treibmittel für Aerosol, Synergisten etc. angeführt.

Zu den Lösungsmitteln zählen Wasser sowie organische Lösungsmittel wie Kohlenwasserstoffe (z.B. n-Hexan, Petrolether, Schwerbenzin (Naphtha), Erdöl-Fraktionen (Paraffinwachs, Kerosin, Gasöl, Mittelöl, Schweröl etc.), Benzol, Toluol, Xylol etc.), halogenierte Kohlenwasserstoffe (z.B. Methylenchlorid, Kohlenstofftetrachlorid, Trichloroethylen, Ethylenchlorid, Ethylendibromid, Chlorbenzol, Chloroform etc.), Alkohole (z.B. Methylalkohol, Ethylalkohol, Propylakohol, Ethylenglycol etc.), Ether (z.B. Ethylether, Ethylenoxid, Dioxan etc.), Alkoholether (z.B. Ethylenglycolmonomethylether), Ketone (z.B. Aceton, Isophoron etc.), Ester (z.B. Ethylacetat, Amylacetat etc.), Ester mehrwertiger Alkohole (z.B. Polyoxyethylen-sorbitanmonolaurat) sowie amphotere oberflächenaktive Mittel.

Zusätzlich verwendet werden können Stabilisatoren, Haftmittel (z.B. landwirtschaftliche Seifen, Caseinkalke, Natriumalginat, Polyvinylakohol (PVA), Haftmittel vom Vinylacetat-Typ, Acryl-Haftmittel etc.), Aerosol-Treibmittel (z.B. Trichlorofluoromethan, Dichlorofluoromethan, 1,2,2-Trichloro-1,1,2-trifluoroethan, Chlorbenzol, verflüssigtes Erdgas, niedere Ether etc.), die Verbrennung steuernde Stoffe (für Raucherzeuger) (z.B. Nitrite, Zink-Staub, Dicyandiamid etc.), Sauerstoff liefernde Stoffe (z.B. Chlorate, Dichromate etc.), die Phytotoxizität reduzierende Mittel (z.B. Zinksulfat, Eisen(II)chlorid, Kupfersulfat etc.), wirkungsverlängernde Mittel, Dispersionsstabilisatoren (z.B. Casein, Tragant, Carboxymethylcellulose (CMC), Polyvinylalkohol (PVA) etc.) sowie synergistische Mittel.

Die Verbindungen der vorliegenden Erfindung können mittels der üblicherweise auf dem Gebiet der Herstellung von Agrochemikalien angewandten Verfahren in die verschiedenen Anwendungsformen überführt werden. Beispiele für solche Anwendungsformen oder Präparate sind emulgierbare Konzentrate, öle, benetzbare Pulver, lösliche Pulver, fließfähige Materialien, Stäube, Granulate, Raucherzeuger, Tabletten, Aerosole, Pasten, Kapseln etc..

Die Schädlingsbekämpfungsmittel gemäß der vorliegenden Erfindung können etwa 0,1 bis etwa 95 vorzugsweise 2,5 bis 90 Gew.-% des vorbezeichneten Wirkstoffs enthalten.

Bei der praktischen Anwendung liegt der Wirkstoff-Gehalt in den verschiedenen Anwendungsformen oder Präparaten und in gebrauchsfertigen Präparaten im allgemeinen im Bereich von etwa 0,0001 bis etwa 20 Gew.-%, vorzugsweise von etwa 0,005 bis etwa 10 Gew.-%.

Der Wirkstoff-Gehalt kann jedoch je nach der Form, der Art und Weise, dem Zweck, dem Stadium und dem Ort der Anwendung und dem Grad des Befalls durch Schadinsekten in geeigneter Weise geändert werden.

Die Verbindungen gemäß der vorliegenden Erfindung können falls notwendig bei gleichzeitiger Anwesenheit von oder in Kombination mit anderen Agrochemikalien wie Insektiziden, Fungiziden, Akariziden, Nematoziden, Viroziden, Herbiziden, Pflanzenwachstumsregulatoren, Lockstoffen (z.B. Organophosphaten, Verbindungen vom Carbamat-Typ, Verbindungen vom Dithio- (oder -thiol)-carbamat-Typ, organische Chlor-Verbindungen, Dinitro-Verbindungen, Organoschwefel- oder Organometall-Verbindungen, Antibiotika, substituierten Diphenylether-Verbindungen, Verbindungen vom Harnstoff-Typ, Verbindungen vom Triazol-Typ etc.) und/oder Düngemitteln.

Die verschiedenen für die Anwendung formulierten Biozide oder gebrauchsfertigen Präparate, die den Wirkstoff gemäß der vorliegenden Erfindung enthalten, können auf die in der landwirtschaftlichen Praxis allgemein übliche Weise aufgebracht werden, beispielsweise durch Sprühen (z.B. Spritzen, Vernebeln, Zerstäuben einer Lösung), Stäuben, Verteilen von Granulat, Aufbringen auf eine Wasseroberfläche, Gießen, Räuchern, Aufbringen auf den Boden (z.B'. Vermischen, Beregnen, Verdampfen, Gießen etc.), Aufbringen auf die Oberfläche (z.B. Beschichten, Anbringen von Binden, Aufstäuben, Bedecken, Eintauchen etc.). Weiterhin kann auch das sogenannte ULV-Verfahren (ultra-low-volume method) des Aufbringens eingesetzt werden; bei diesem Verfahren kann der Wirkstoff-Gehalt 100 % betragen.

Der Wirkstoff kann in einer Menge von etwa 0,03 bis etwa 10 kg/ha, vorzugsweise, von etwa 0,3 bis etwa 6 kg/ha, eingesetzt werden. In besonderen Fällen kann oder in einigen Fällen muß die Aufwandsmenge jedoch die Beträge des angegebenen Bereichs über- oder unterschreiten.

Somit macht die vorliegende Erfindung Insektizide, Akarizide und Nematozide verfügbar, die als Wirkstoffe die Verbindungen der vorstehenden allgemeinen Formel (I) sowie Verdünnungsmittel (Lösungsmittel und/oder Verdünnungsmittel und/oder Träger) und/oder oberflächenaktive Mittel und, falls erforderlich, Stabilisatoren, Haftmittel und Synergisten enthalten.

Weiterhin macht die vorliegende Erfindung ein Verfahren zur Bekämpfung schädlicher Insekten, Zecken und Nematoden verfügbar, bei dem eine Verbindung der vorstehenden allgemeinen Formel (I) allein oder in Kombination mit einem Verdünnungsmittel (Lösungsmittel und/oder Verdünnungsmittel und/oder Träger) und/oder einem oberflächenaktiven Mittel und, falls erforderlich, einem Stabilisator, Haftmittel und Synergisten auf schädliche Insekten, Zecken, Nematoden sowie auf Orte, an denen diese Schädlinge leben oder sich entwickeln, zur Einwirkung gebracht wird.

Die vorliegende Erfindung wird durch die folgenden Beispiele näher erläutert, ist jedoch nicht auf diese begrenzt.

### Beispiel 1 (Benetzbares Pulver)

-15 Teile der Verbindung Nr. 1 der vorliegenden Erfindung, 80 Teile eines Gemisches aus Weißruß (feinem wasserhaltigen amorphen Siliciumdioxid-Staub) und Tonpulver (1:5), 2 Teile Natriumalkylbenzolsulfonat und 3 Teile Natriumalkylnaphthalinsulfonat/Formaldehyd-Kondensat wurden pulverisiert und zu einem benetzbaren Pulver vermischt. Dieses wurde mit Wasser verdünnt und auf Schadinsekten, Zecken und Nematoden oder Orte, an denen diese Schädlinge leben oder sich entwickeln, aufgesprüht.

### Beispiel 2 (Emulgierbares Konzentrat)

30 Teile der Verbindung Nr. 4 der vorliegenden Erfindung, 55 Teile Xylol, 8 Teile Polyoxyethylen-alkylphenylether und 7 Teile Calciumalkylbenzolsulfonat wurden unter Rühren miteinander vermischt, wodurch ein emulgierbares Konzentrat hergestellt wurde. Dieses wurde mit Wasser verdünnt und auf Schadinsekten, Zecken und Nematoden und/oder deren Lebensraum oder Orte, an denen diese Schädlinge sich entwickeln, aufgesprüht.

### Beispiel 3 (Stäubemittel)

2 Teile der Verbindung Nr. 6 der vorliegenden Erfindung und 98 Teile Tonpulver wurden pulverisiert und gemischt, wodurch ein Stäubemittel hergestellt wurde. Dieses wurde über Schadinsekten, Zecken und Nematoden und/oder deren Lebensraum oder Orte, an denen diese Schädlinge sich entwickeln, verteilt.

### Beispiel 4 (Stäubemittel)

1,5 Teile der Verbindung Nr. 7 der vorliegenden Erfindung, 0,5 Teile Isopropylhydrogenphosphat (PAP) und 98 Teile Tonpulver wurden pulverisiert und gemischt, wodurch ein Stäubemittel hergestellt wurde. Dieses wurde über Schadinsekten, Zecken und Nematoden und/oder deren Lebensraum oder Orte, an denen diese Schädlinge sich entwickeln, verteilt.

### Beispiel 5 (Granulat)

25 Teile Wasser wurden zu einer Mischung aus 10 Teilen der Verbindung Nr. 10 der vorliegenden Erfindung, 30 Teilen Bentonit (Montmorillonit), 58 Teilen Talkum und 2 Teilen Ligninsulfonat zugesetzt, und das Gemisch wurde gut geknetet. Die Mischung wurde mittels eines Extruder-Granulators zu einem Granulat mit einer Korngröße von 0,43 bis 2,0 mm (10 bis 40 mesh) verarbeitet und bei 40°C bis 50°C getrocknet, wodurch ein Granulat hergestellt wurde. Dieses wurde über Schadinsekten, Zecken und Nematoden und/oder deren Lebensraum oder Orte, an denen diese Schädlinge sich entwickeln, verteilt.

### Beispiel 6 (Granulat)

Ein Drehmischer wurde mit 95 Teilen Tonmineral-Teilchen mit einer Teilchengrößen-Verteilung im Bereich von 0,2 bis 2 mm beschickt, und unter Drehen des Mischers wurden 5 Teile der öligen Verbindung Nr. 12 der vorliegenden Erfindung zur gleichmäßigen Adsorption auf die Tonmineral-Teilchen aufgesprüht, wodurch ein Granulat hergestellt wurde. Dieses wurde über Schadinsekten, Zecken und Nematoden und/oder deren Lebensraum oder Orte, an denen diese Schädlinge sich entwickeln, verteilt.

### Beispiel 7 (Öl)

0,5 Teile der Verbindung Nr. 13 der vorliegenden Erfindung und 99,5 Teile Kerosin wurden unter Rühren miteinander vermischt, wodurch ein öl hergestellt wurde. Dieses wurde auf Schadinsekten, Zecken und Nematoden und/ oder deren Lebensraum oder Orte, an denen diese Schädlinge sich entwickeln, aufgebracht.

Im Vergleich zu bekannten wirksamen Verbindungen mit analoger Struktur und mit ähnlich wirksamen Verbindungen sind die neuen Verbindungen gemäß der vorliegenden Erfindung dadurch gekennzeichnet, daß sie beträchtlich verbesserte Wirkungen und dabei eine außerordentlich geringe Toxizität gegenüber warmblütigen Tieren zeigen und infolgedessen sehr wertvoll sind.

Die in unerwarteter Weise hervorragenden Eigenschaften und bemerkenswerten Wirkungen der aktiven Verbindungen gemäß der vorliegenden Erfindung sind aus den folgenden Ergebnissen zu ersehen, die beim Einsatz dieser Wirkstoffe gegen verschiedene Schadinsekten, Zecken und Nematoden erhalten wurden.

### Testbeispiel 1

### Test mit Larven von Spodoptera litura:

Herstellung der Prüflösung:

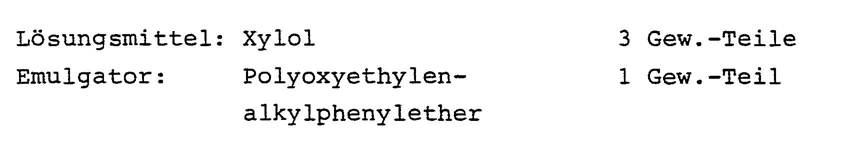

Zur Herstellung von geeigneten Wirkstoff-Präparaten wurde 1 Gew.-Teil der betreffenden aktiven Verbindungen mit der angegebenen Menge Lösungsmittel, die die angegebene Menge Emulgator enthielt vermischt, und die erhaltene Mischung wurde mit Wasser auf eine vorher festgesetzte Konzentration verdünnt.

Test-Verfahren:
Blätter süßer Kartoffeln wurden in die wäßrige Verdünnung mit der vorbestimmten Wirkstoff-Konzentration getaucht und nach dem Trocknen an der Luft in Petrischalen von 9 cm Durchmesser gelegt. 10 Larven im 3. Stadium von Spodoptera litura wurden eingesetzt, und die Petrischalen wurden in einen thermostatisierten Raum von 28°C gestellt. Nach 24 h wurde die Zahl der toten Larven bestimmt und das Vernichtungsverhältnis berechnet.

Die so erhaltenen Ergebnisse sind in Tabelle 1 aufgeführt.

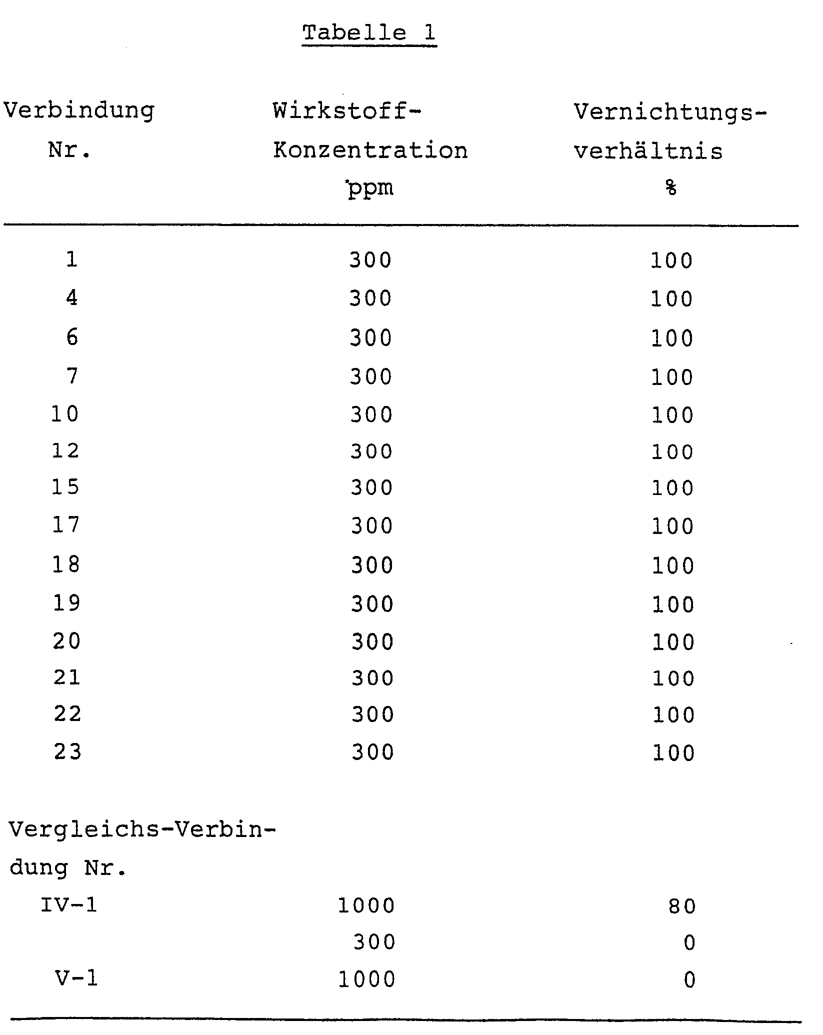

Anmerkungen zu Tabelle 1:
1. Die Verbindungs-Nummern sind die gleichen wie in Synthesebeispiel 1 und der Tabelle 9, die im Folgenden beschrieben werden.
2. Die Vergleichs-Verbindungen sind die nachstehenden: Vergleichs-Verbindung IV-1:

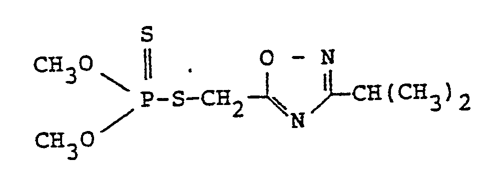

### (beschrieben in der US-PS 4 237 121);

Vergleichs-Verbindung V-1: 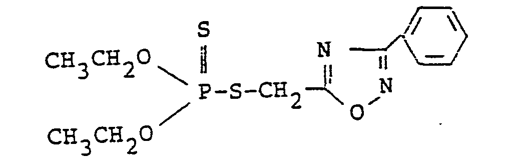 (beschrieben in der US-PS 3 432 519, entsprechend der JP-Patentveröffentlichung Nr. 24600/69).

### Testbeispiel 2

### Test mit Callosobruchus chinensis:

Test-Verfahren:

Ein Filterpapier wurde jeweils in eine 9 cm-Petrischale gelegt, und 1 ml jeder der mit Wasser verdünnten, eine vorbestimmte Wirkstoff-Konzentration aufweisenden Lösungen, die in Testbeispiel 1 hergestellt wurden, wurde hinzugegeben. 20 Callosobruchus chinensis wurden eingesetzt, und die Petrischalen wurden in einen thermostatisierten Raum von 28°C gestellt. Nach 24 h wurde die Zahl der toten Insekten bestimmt und das Vernichtungsverhältnis berechnet.

Die so erhaltenen Ergebnisse sind in Tabelle 2 aufgeführt.

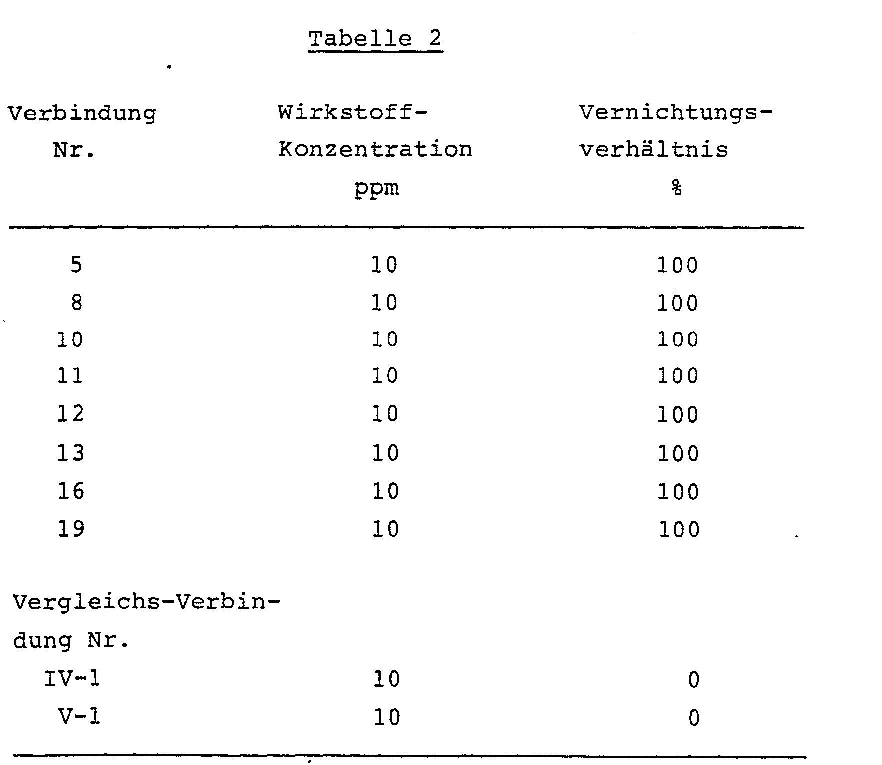

### Anmerkungen zu Tabelle 2:

1. Die Verbindungs-Nummern sind die gleichen wie in der Tabelle 9.

2. Die Vergleichs-Verbindungen IV-1 und V-1 sind die gleichen wie in Tabelle 1.

### Testbeispiel 3

### Test mit gegen Organophosphor-Insektizide resistenten Nephotettix cincticeps:

### Test-Verfahren:

Jede der mit Wasser verdünnten, eine vorbestimmte Wirkstoff-Konzentration aufweisenden Lösungen, die wie in Testbeispiel 1 hergestellt wurden, wurde über Reispflanzen von etwa 10 cm Höhe gesprüht, die jeweils in einen Topf von 12 cm Durchmesser gepflanzt waren. Nach dem Trocknen der aufgesprühten Lösung wurde jeder Topf mit einem Drahtkorb von 7 cm Durchmesser und 14 cm Höhe bedeckt, unter dem 30 ausgewachsene weibliche Exemplare von Nephotettix cincticeps, die gegen Organophosphor-Insektizide resistent waren, ausgesetzt waren. Nach 24-stündiger Aufbewahrung in einem thermostatisierten Raum wurde die Zahl der toten Insekten bestimmt und das Vernichtungsverhältnis berechnet.

Die so erhaltenen Ergebnisse sind in Tabelle 3 aufgeführt.

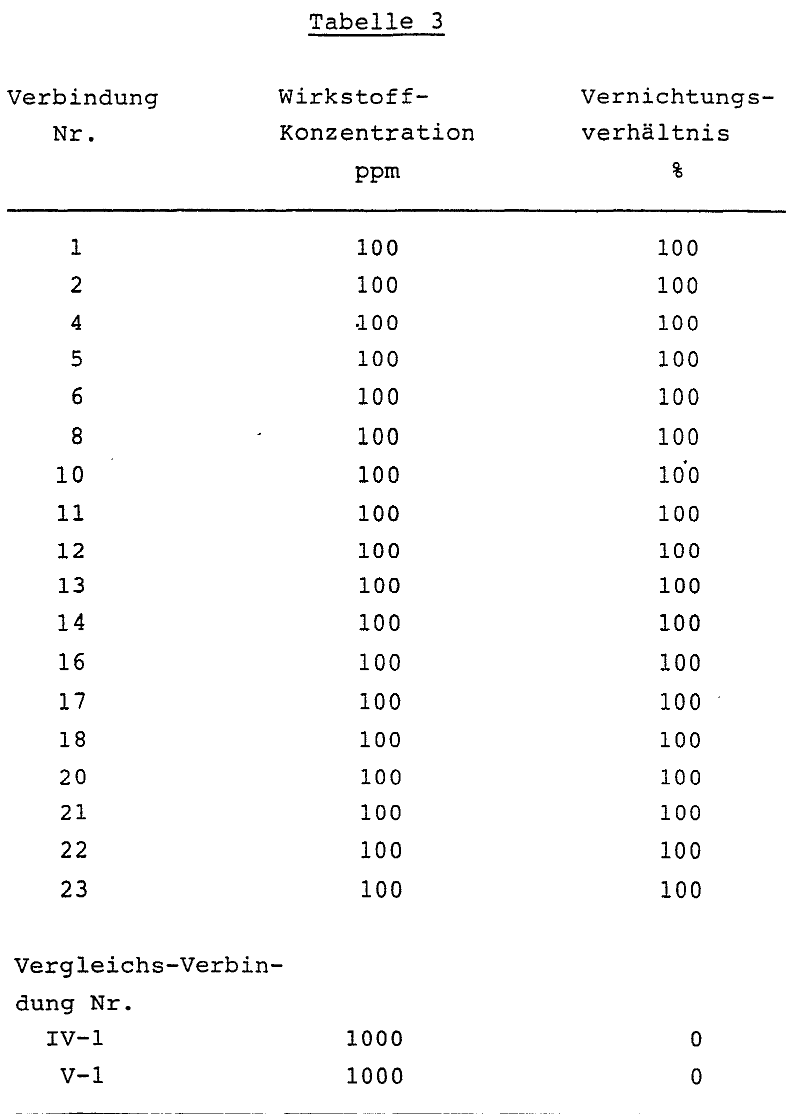

### Anmerkungen zu Tabelle 3:

1. Die Verbindungs-Nummern sind die gleichen wie in Synthesebeispiel 1 und der Tabelle 9, die im Folgenden beschrieben werden.

2. Die Vergleichs-Verbindungen IV-1 und V-1 sind die gleichen wie in Tabelle 1.

### Testbeispiel 4

### Test mit Musca domestica:

### Test-Verfahren:

Ein Filterpapier wurde jeweils in eine 9 cm-Petrischale gelegt,und 1 ml jeder der mit Wasser verdünnten, eine vorbestimmte Wirkstoff-Konzentration aufweisenden Prüflösungen, die wie in Testbeispiel 1 hergestellt wurden, wurde hinzugegeben. 10 ausgewachsene weibliche Exemplare von Musca domestica, die gegen Organophosphor-Insektizide resistent waren, wurden eingesetzt, und die Petrischalen wurden in einen thermostatisierten Raum von 28°C gestellt. Nach 24 h wurde die Zahl der toten Insekten bestimmt und das Vernichtungsverhältnis berechnet.

Die so erhaltenen Ergebnisse sind in Tabelle 4 aufgeführt.

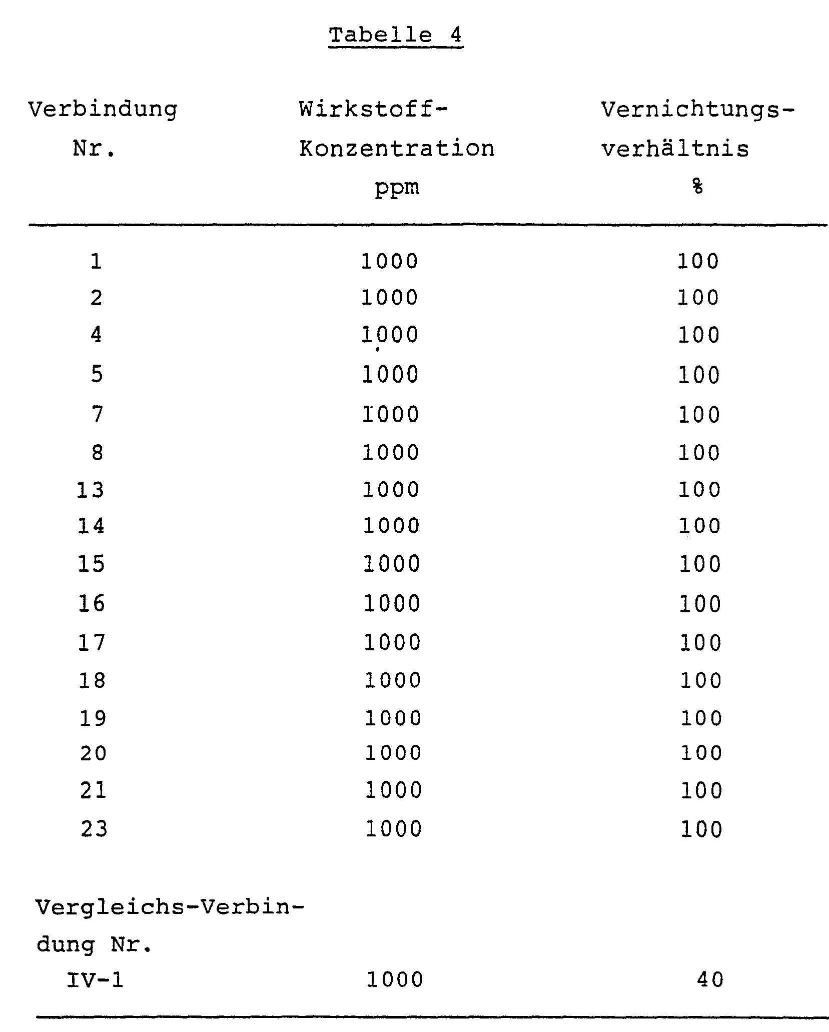

### Anmerkungen zu Tabelle 4:

1. Die Verbindungs-Nummern sind die gleichen wie in Synthesebeispiel 1 und der Tabelle 9, die im Folgenden beschrieben werden.

2. Die Vergleichs-Verbindung IV-1 ist die gleiche wie in Tabelle 1.

### Testbeispiel 5

### Test mit Tetranychus cinnabarius (mittels Verteilung)

Test-Verfahren:
50 bis 100 ausgewachsene Exemplare von Tetranychus cinnabarius, die gegen Organophosphor-Akarizide resistent waren, wurden auf den Blättern von Vits-Bohnen im 2-Blatt-Stadium ausgesetzt. Nach einer Wartezeit von 2 Tagen wurden mit Wasser verdünnte, eine vorbestimmte Wirkstoff-Konzentration aufweisende Prüflösungen, die wie in Testbeispiel 1 hergestellt wurden, in einer Menge von 40 ml je Topf über die Blätter verteilt. Nach zehntägigem Verbleib im Gewächshaus wurde die Bekämpfungswirkung mit Hilfe der nachstehenden Indices bewertet:

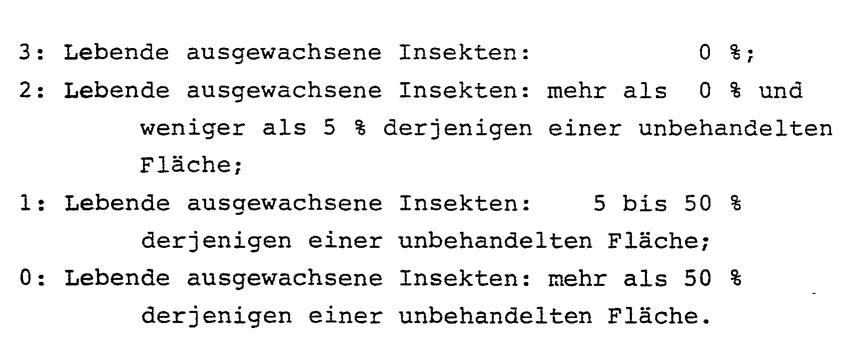

Die so erhaltenen Ergebnisse sind in Tabelle 5 aufgeführt.

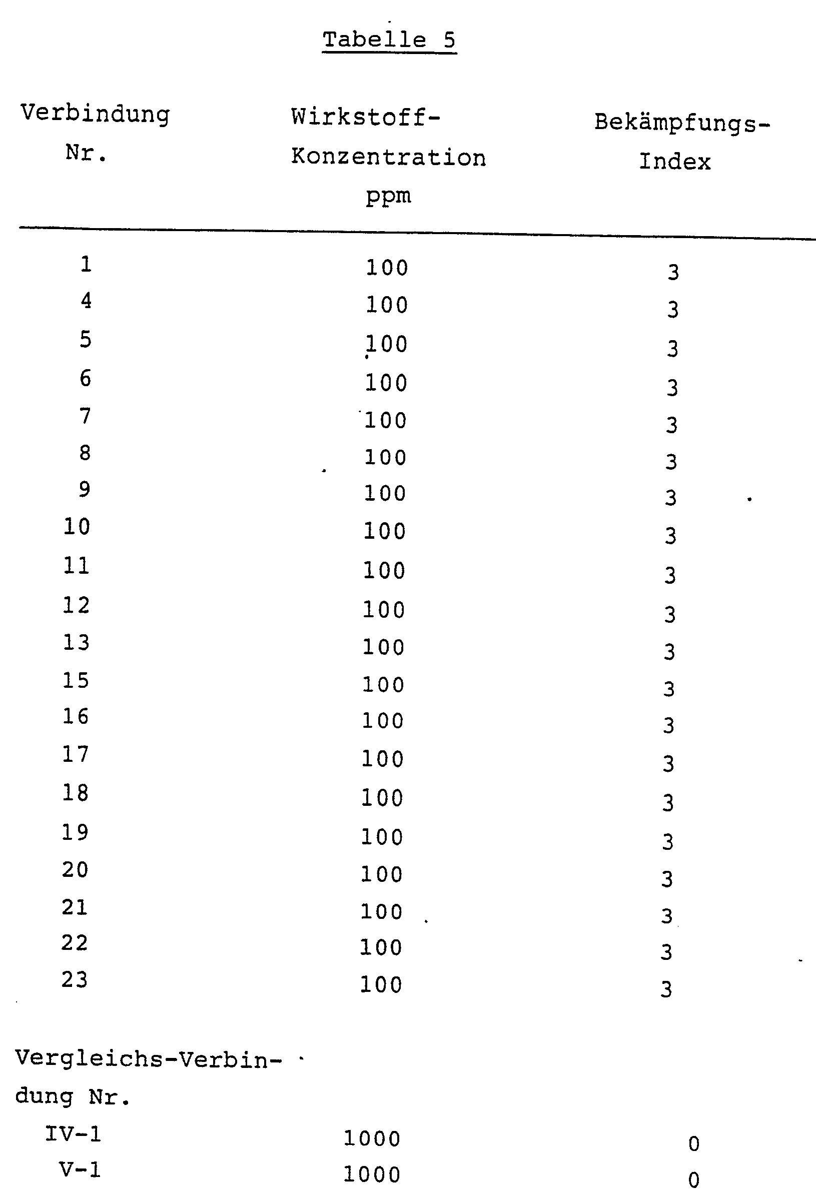

### Anmerkungen zu Tabelle 5:

1. Die Verbindungs-Nummern sind die gleichen wie in Synthesebeispiel 1 und der Tabelle 9, die im Folgenden beschrieben werden.

2. Die Vergleichs-Verbindungen IV-1 und V-1 sind die gleichen wie in Tabelle 1.

### Testbeispiel 6

### Test mit Blatella Germanica:

### Test-Verfahren:

Ein Filterpapier wurde jeweils in eine 9 cm-Petrischale gelegt, und 1 ml jeder der mit Wasser verdünnten, eine vorbestimmte Wirkstoff-Konzentration aufweisenden Prüflösungen, die wie in Testbeispiel 1 hergestellt wurden, wurde hinzugegeben. 10 ausgewachsene Exemplare von Blatella Germanica, wurden eingesetzt, und die Petrischalen wurden in einen thermostatisierten Raum von 28°C gestellt. Nach 24 h wurde die Zahl der toten Insekten bestimmt und das Vernichtungsverhältnis berechnet.

Die so erhaltenen Ergebnisse sind in Tabelle 6 aufgeführt.

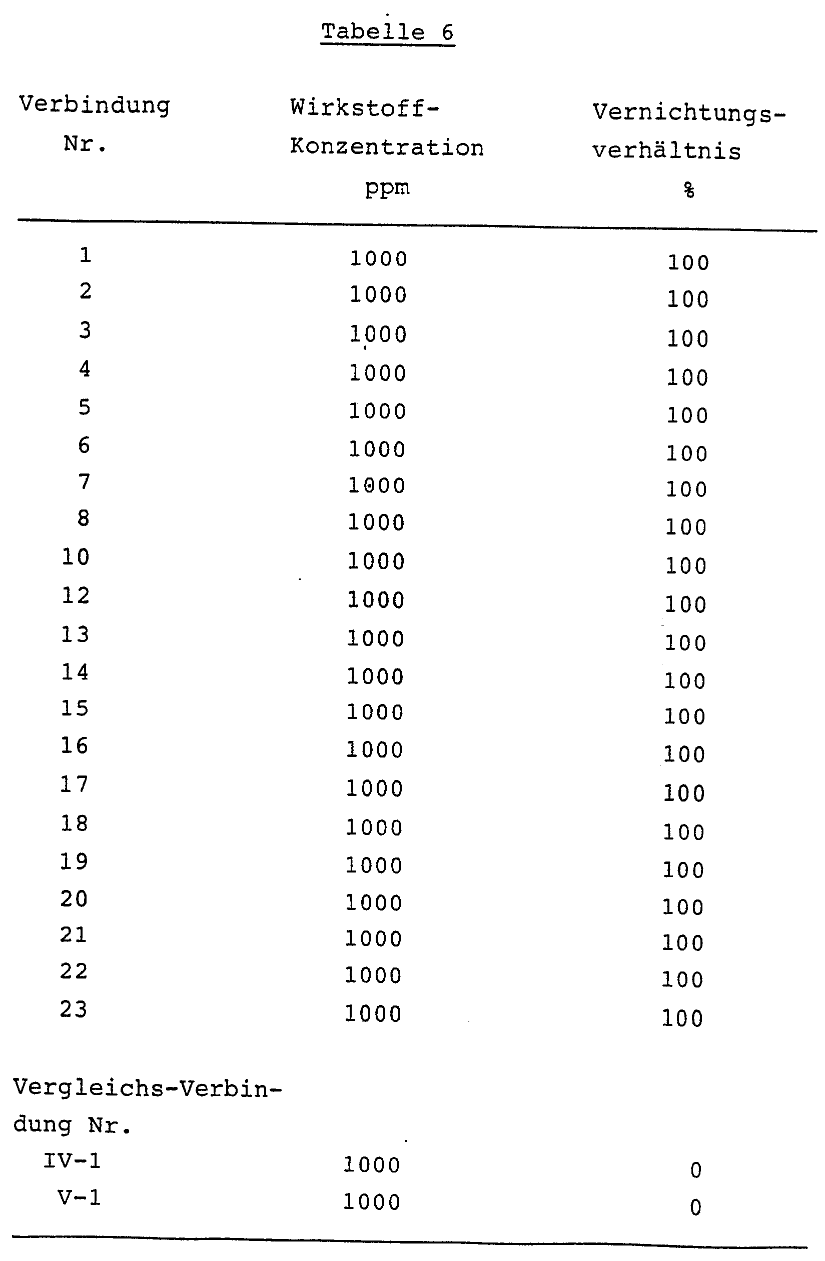

### Anmerkungen zu Tabelle 6:

1. Die Verbindungs-Nummern sind die gleichen wie in Synthesebeispiel 1 und der Tabelle 9, die im Folgenden beschrieben werden.

2. Die Vergleichs-Verbindung IV-1 und V-1 sind die gleichen wie in Tabelle 1.

### Testbeispiel 7

### Test mit Culex pipiens -Larven:

### Test-Verfahren:

100 ml jeder der mit Wasser verdünnten, eine vorbestimmte Wirkstoff-Konzentration aufweisenden Prüflösungen, die wie in Testbeispiel 1 hergestellt wurden, wurden in eine 9 cm tiefe Petrischale gegeben, und 25 Larven im 4. Stadium von Culex pipiens wurden darin freigelassen und in einem thermostatisierten Raum bei 28°C gehalten. Nach 24 h wurde die Zahl der toten Insekten bestimmt und das Vernichtungsverhältnis berechnet.

Die so erhaltenen Ergebnisse sind in Tabelle 7 aufgeführt. -

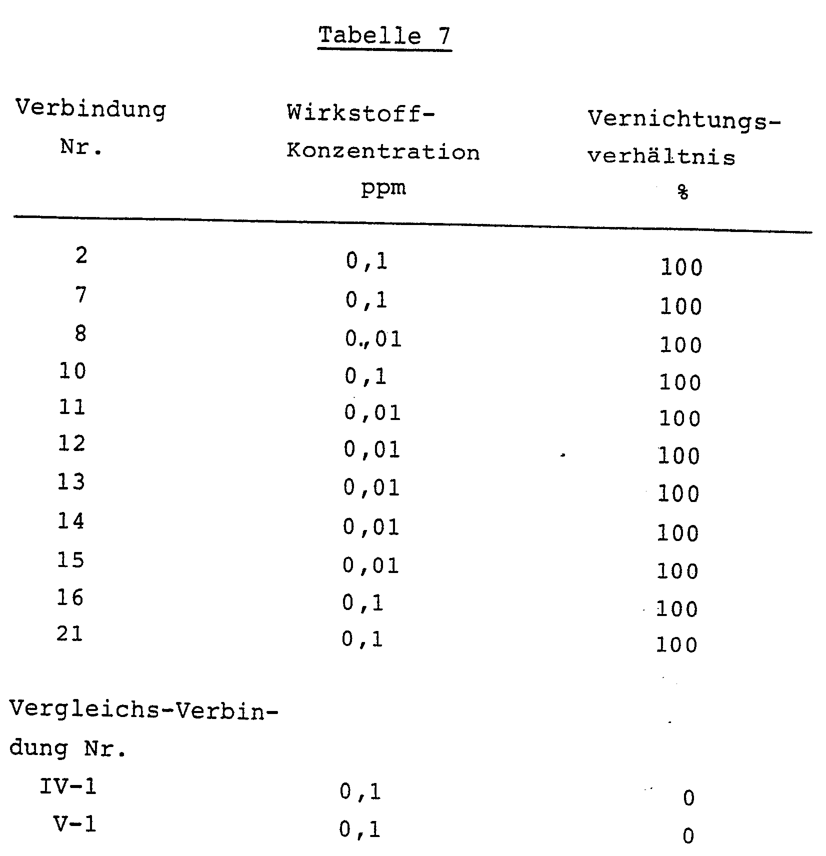

### Anmerkungen zu Tabelle 7:

1. Die Verbindungs-Nummern sind die gleichen wie in Tabelle 9.

2. Die Vergleichs-Verbindungen IV-1 und V-1 sind die gleichen wie in Tabelle 1.

### Testbeispiel 8

### Test mit Meloidogyne incognita:

### Herstellung des Testpräparates:

2 Teile einer aktiven Verbindung und 98 Teile Talkum wurden pulverisiert und miteinander vermischt.

Test-Verfahren:
Das vorbezeichnete Test-Präparat wurde in Mengen von 50, 25, 10 oder 5 ppm auf durch Meloidogyne incognita verseuchten Erde aufgebracht und zur Vermischung mit diesem gleichmäßig verrührt. Anschließend wurde die so behandelte Erde in Töpfe von 2 dm² gefüllt. In diese wurden etwa 20 Körner Tomaten-Samen (Art: Kurihara) eingesät und im Gewächshaus angezogen. Nach vier Wochen wurden die Tomatenpflanzen herausgezogen, ohne dabei ihre Wurzeln zu beschädigen, und der Grad der Schädigung von 10 Tomatenpflanzen wurde zur Bestimmung des Wurzelgallen-Index nach dem folgenden Maßstab bewertet: Grad der

Schädigung:
0: keine Gallen (vollständige Bekämpfung);
1: sehr wenige Gallen;
3: viele Gallen;
4: sehr viele Gallen (entsprechend denjenigen unbehandelter Pflanzen).

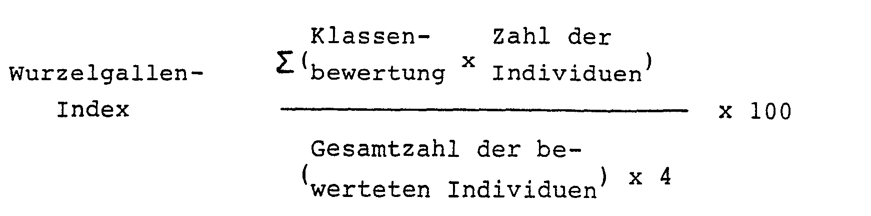

Zusätzlich wurde die Bewertung aufgrund der Bekämpfungswirkung vorgenommen, die mit Hilfe der nachstehenden Formel bestimmt wurde:

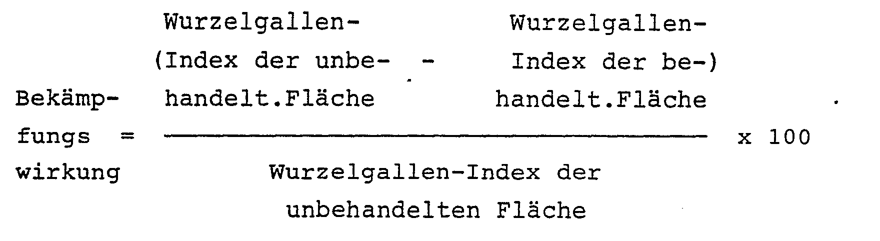

Eine Bekämpfungswirkung von 100 % bezeichnet eine vollständige Bekämpfung. Die so erhaltenen Ergebnisse sind in Tabelle 7 aufgeführt.

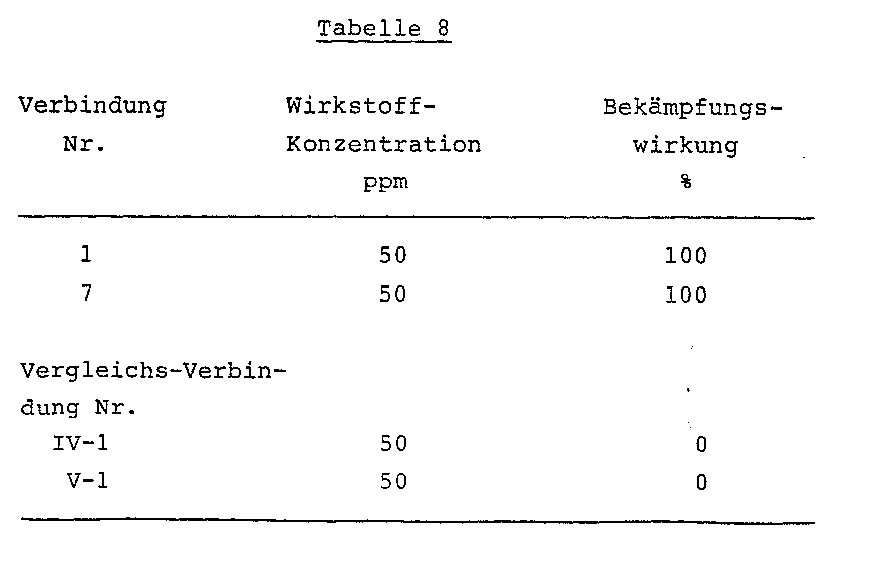

Anmerkungen zu Tabelle 8:
1. Die Verbindungs-Nummern sind die gleichen wie in dem Synthesebeispiel und der Tabelle 9.
2. Die Vergleichs-Verbindungen IV-1 und V-1 sind die gleichen wie in Tabelle 1.

Das folgende Synthesebeispiel beschreibt im einzelnen das Verfahren zur Herstellung einer Verbindung gemäß der vorliegenden Erfindung.

### Synthesebeispiel 1

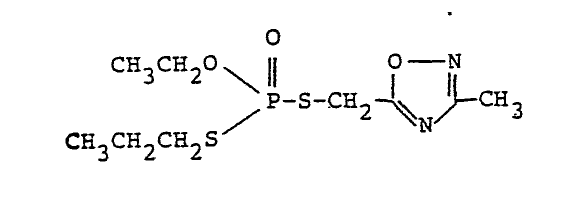

### (Verbindung Nr. 1)

Eine Mischung aus 7,4 g Kalium-O-ethyl-S-n-propylphosphorodithiolat, 3,31 g 3-Methyl-1,2,4-oxadiazol-5-yl- methylchlorid und 50 ml Acetonitril wurde 7 h bei 40°C bis 50°C gerührt. Nach dem Abdestillieren des Acetonitrils wurden 50 ml Wasser zu dem Rückstand gegeben, und nach dem Verrühren wurde ein öliges Produkt mit 60 ml Toluol extrahiert. Der Toluol-Extrakt wurde zweimal mit jeweils 50 ml einer gesättigten wäßrigen Natriumhydrogencarbonat-Lösung gewaschen. Nach weiterem Waschen mit Wasser wurde die organische Schicht abgetrennt und mit wasserfreiem Natriumsulfat getrocknet. Nach dem Abdestillieren des Toluols wurde der Rückstand unter vermindertem Druck destilliert, wonach 5,2 g des blaßgelben Endprodukts, O-Ethyl-S-n-propyl-S-(3-methyl-1,2,4-oxadiazol-5-ylmethyl)phosphorodithiolat, erhalten wurden; Sdp. 155-158°C/0,20 mbar (0,15 mmHg).

Typische Beispiele der Verbindungen gemäß der vorliegenden Erfindung, die in nahezu der gleichen Weise wie im Vorstehenden beschrieben synthetisiert wurden, sind in der folgenden Tabelle 9 aufgeführt.

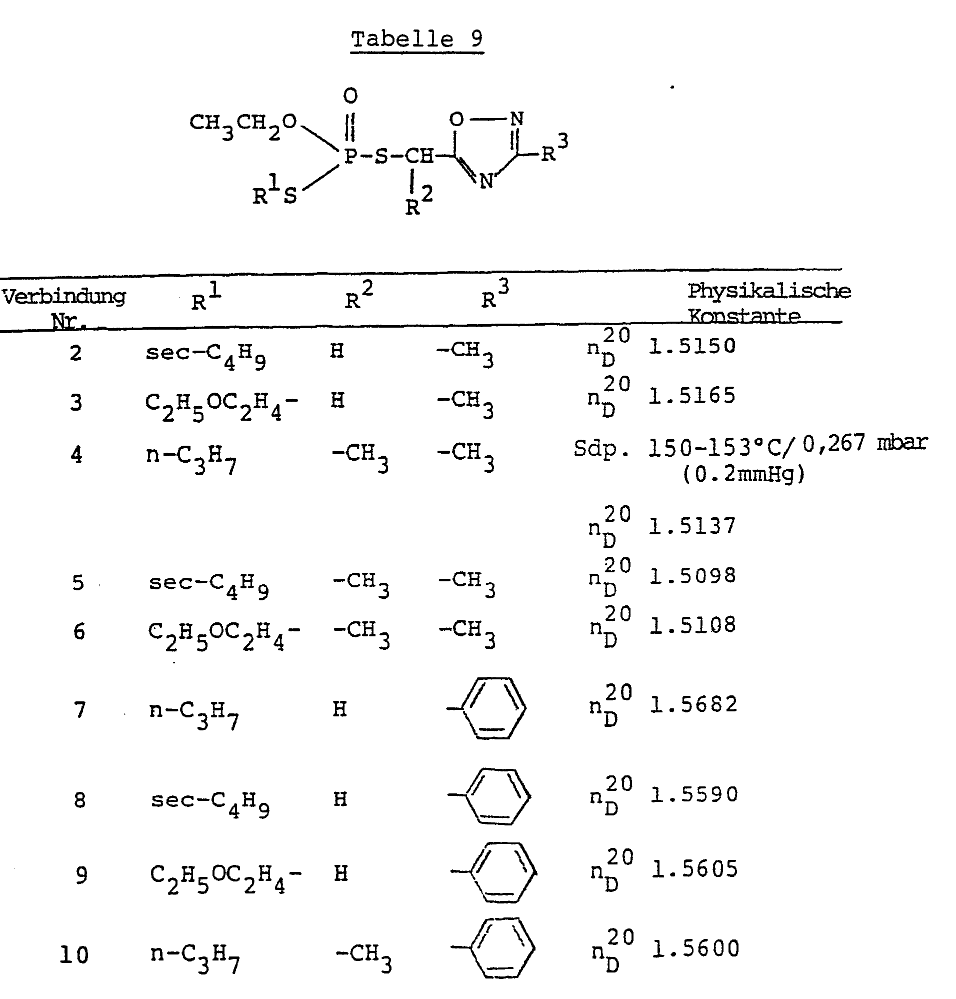

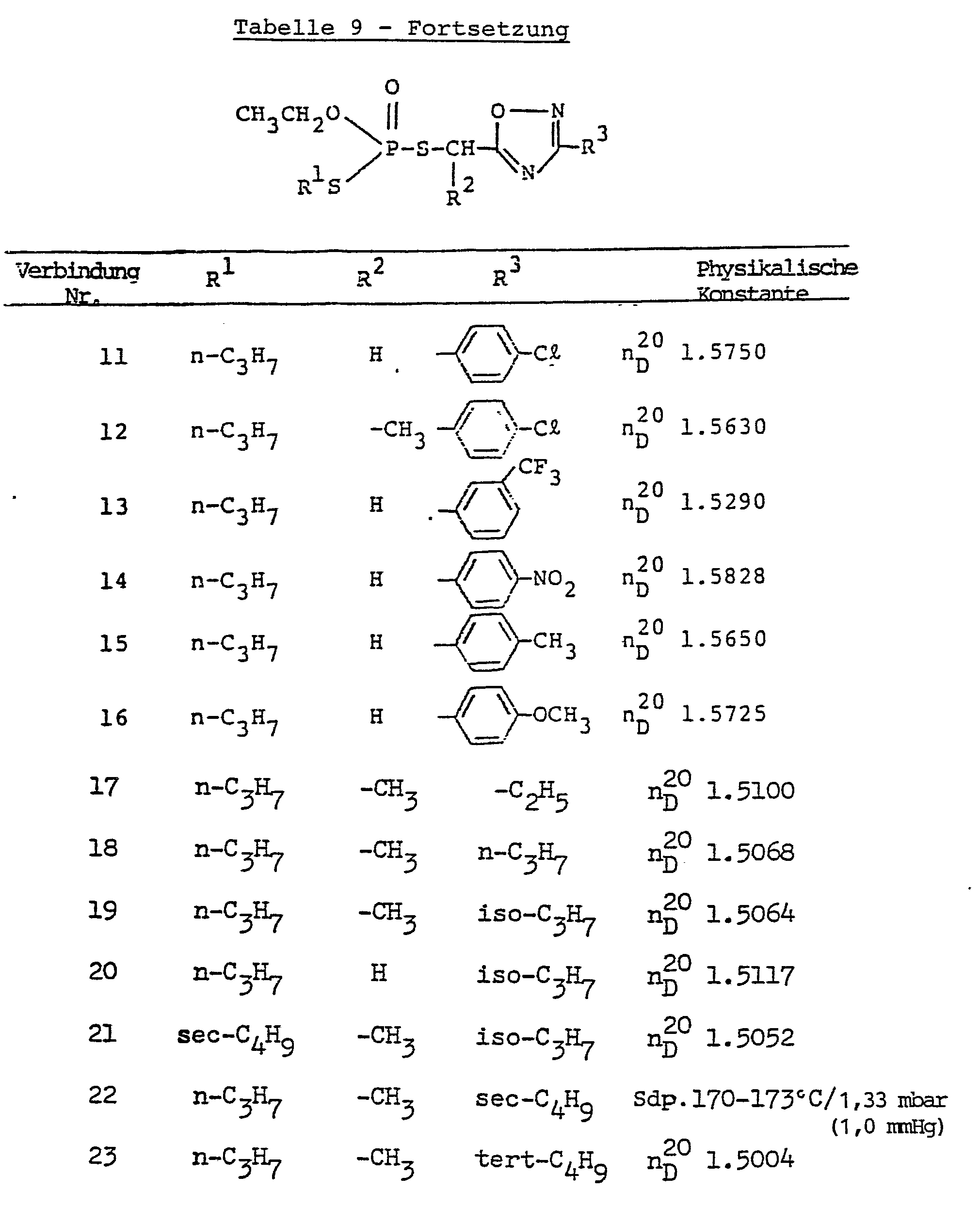

## Patentansprüche

1. Organophosphat der nachstehenden allgemeinen Formel 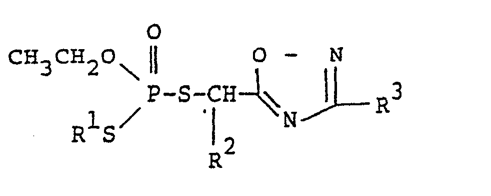 in der
R für eine Alkyl-Gruppe mit 3 bis 4 Kohlenstoff-Atomen oder eine Alkoxyethyl-Gruppe mit einer Alkoxy-Struktureinheit mit 1 bis 4 Kohlenstoff-Atomen,
R² für ein Wasserstoff-Atom oder eine Methyl-Gruppe und
_{R}³ für eine Alkyl-Gruppe mit 1 bis 4 Kohlenstoff-Atomen oder eine Phenyl-Gruppe, die durch mindestens einen Substituenten ausgewählt aus der aus einem Halogen-Atom, einer Trifluoromethyl-Gruppe, Nitro-Gruppe, Alkyl-Gruppe mit 1 bis 4 Kohlenstoff-Atomen und Alkoxy-Gruppe mit 1 bis 4 Kohlenstoff-Atomen bestehenden Gruppe substituiert sein kann, stehen.

2. Organophosphat nach Anspruch 1, dadurch gekennzeichnet, daß R¹ für eineAlkylgruppe mit 3 oder 4 Kohlenstoff- atomen oder eine Alkoxyethylgruppe mit 1 bis 4 Kohlenstoffatomen in der Alkoxygruppe steht; R für Wasserstoff oder Methyl steht; und R³ für Alkyl mit 1 bis 4 Kohlenstoffatomen, für Phenyl oder für Phenyl, welches durch Halogen, Trifluormethyl, Nitro, C₁₋₄-Alkyl und/ oder C₁₋₄-Alkoxy substituiert ist, steht.

3. Organophosphat nach Anspruch 1, dadurch gekennzeichnet, daß _{R}¹ für n-Propyl, sec.-Butyl oder Ethoxyethyl steht; R² für Wasserstoff oder Methyl steht; und _{R}³ für Alkyl mit 1 bis 4 Kohlenstoffatomen oder für gegebenenfalls durch Halogen, Trifulormethyl, Nitro, C₁₋₄-Alkyl und/oder C₁₋₄-Alkoxy substituiertes Phenyl steht.

4. Organophosphat nach Anspruch 2, dadurch gekennzeichnet, daß R³ für Alkyl mit 1 bis 4 Kohlenstoffatomen steht.

5. Organophosphat nach Anspruch 2, dadurch gekennzeichnet, daß R³ für Phenyl steht, welches gegebenenfalls durch Halogen, Trifluormethyl, Nitro, C₁₋₄-Alkyl und/oder C₁₋₄-Alkoxy substituiert ist.

6. Organophosphat nach Anspruch 3, dadurch gekennzeichnet, daß R³ für Alkyl mit 1 bis 4 Kohlenstoffatomen für Phenyl oder für Phenyl, welches durch Methyl, Trifluormethyl, Methoxy, Nitro oder Chlor substituiert ist, steht.

7. Verfahren zur Herstellung von Organophosphaten der nachstehenden allgemeinen Formel 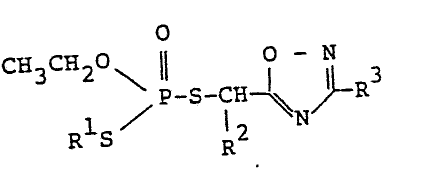 in der R¹, R² und R³ die im Folgenden angegebenen Bedeutungen haben, dadurch gekennzeichnet, daß ein Phosphordithiolat der nachstehenden allgemeinen Formel 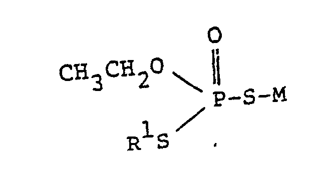 in der
._{R}¹ für eine Alkyl-Gruppe mit 3 bis 4 Kohlenstoff-Atomen oder eine Alkoxyethyl-Gruppe mit einer Alkoxy-struktureinheit mit 1 bis 4 Kohlenstoff-Atomen und
M für ein Wasserstoff-Atom, ein Alkalimetall-Atom oder eine Ammonium-Gruppe stehen, oder deren Salz mit einer Verbindung der nachstehenden allgemeinen Formel 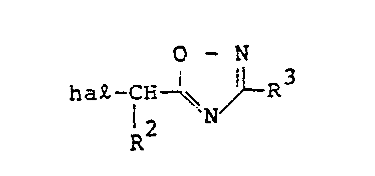
in der
R² für ein Wasserstoff-Atom oder eine Methyl-Gruppe und
R³ für eine Alkyl-Gruppe mit 1 bis 4 Kohlenstoff-Atomen oder eine Phenyl-Gruppe, die durch mindestens einen Substituenten ausgewählt aus der aus einem Halogen-Atom, einer Trifluoromethyl-Gruppe, Nitro-Gruppe, Alkyl-Gruppe mit 1 bis 4 Kohlenstoff-Atomen und Alkoxy-Gruppe mit 1 bis 4 Kohlenstoff-Atomen bestehenden Gruppe substituiert sein kann, und
Hal für ein Halogen-Atom
stehen, umgesetzt wird.

8. Schädlingsbekämpfungsmittel gekennzeichnet durch den Gehalt an mindestens einer Verbindung gemäß den Ansprüchen 1 bis 6.

9. Verfahren zur Herstellung der Schädlingsbekämpfungsmittel gemäß Anspruch.8, dadurch gekennzeichnet, daß man mindestens eine Verbindung gemäß den Ansprüchen 1 bis 6 mit inerten Streck- und Verdünnungsmitteln und gegebenenfalls oberflächenaktiven Stoffen und gegebenenfalls anderen Formulierhilfsmitteln mischt.

10. Verwendung der Organophosphate gemäß Ansprüchen 1 bis 6 zur Bekämpfung von Schädlingen.
